# EUROPEAN PATENT APPLICATION

(11) **EP 4 671 031 A1**
(43) Date of publication of application: **31.12.2025**
(21) Application number: 24183978.6
(22) Date of filing: 24.06.2024
(51) Int. Cl.: B60L 3/12, B60L 53/14, B60L 53/30, B60L 53/35, B60L 53/37, B60L 53/53, B60L 53/55, B60L 53/62, B60L 53/65, B60L 53/66, B60L 58/14, B60L 50/50, B60L 53/16, B60L 53/36, B60L 53/57

(54) **RESCUE CHARGING SHUTTLE**

(71) Applicant: MOVU, 9160 Lokeren (BE)
(72) Inventor: LEMOINE, Fabrice, 2600 Berchem (BE)
(74) Representative: IP HILLS NV

(57) **Abstract**

A rescue charging shuttle for an automated warehouse facility that is configured to deliver emergency power to a receiver shuttle in an optimized and autonomous way. The rescue shuttle is able to identify and detect receiver shuttles in a low-power state, and to connect to them autonomously to deliver an emergency electrical charge.

## Description

### Field of the Invention

The present invention generally relates to an automated warehouse rescue charging shuttle or rescue shuttle that is configured to deliver emergency power to other shuttles or equipment.

### Background of the Invention

At present, it is common to operate a large number of identical robotic shuttles simultaneously an in automated warehouse. In case of a technical breakdown or malfunction of such a shuttle, a human intervention may be required. A frequent problem in maintaining an automated warehouse operational is to keep the batteries of the automated shuttles charged. This may be due to several reasons. Robotic shuttles in automated warehouses rely on batteries for power. Depending on the design and workload, these batteries may have limited capacity, leading to the need for frequent charging. Also does the operation of robotic shuttles typically involve frequent movement, navigation, and lifting of heavy loads, all of which require significant energy. This high energy consumption can drain batteries quickly, necessitating regular charging intervals.

Automated warehouses often operate around the clock to meet demand. Continuous operation puts a strain on the batteries, requiring them to be charged multiple times throughout the day to sustain productivity. Moreover, ensuring adequate charging infrastructure, such as charging stations strategically located throughout the warehouse, is essential. If the infrastructure is insufficient or improperly configured, it can lead to delays in charging or inadequate power supply, hampering warehouse operations. Charging batteries to full capacity can take time, during which the robotic shuttles may be out of operation. Balancing the need for charging with the requirement for uninterrupted workflow is crucial to maintaining efficiency in the warehouse.

On top of this, batteries degrade over time due to factors such as usage patterns, temperature fluctuations, and the number of charge-discharge cycles. Degraded batteries hold less charge and may require more frequent charging or replacement, posing challenges to warehouse maintenance. In some cases, battery swapping or replacement may be necessary to ensure uninterrupted operation. Managing the logistics of swapping batteries, including scheduling, storage, and maintenance of spare batteries, adds complexity to warehouse operations. Charging batteries safely is paramount to prevent risks such as overheating, fire, or explosion. Implementing proper charging protocols, monitoring systems, and safety measures is essential to mitigate these risks and maintain a safe working environment in the warehouse.

Addressing these challenges requires careful planning, investment in reliable charging infrastructure, proactive maintenance of batteries, and implementation of efficient charging protocols. By addressing battery charging issues effectively, automated warehouses can minimize downtime, optimize productivity, and ensure smooth operation of robotic systems.

### Summary of the Invention

It is an object of the present invention, amongst others, to solve or alleviate the above identified problems and challenges by providing a rescue charging shuttle or rescue shuttle adapted to move in an automated warehouse facility and to deliver emergency power to a receiver shuttle in said automated warehouse, said rescue shuttle comprising a driving means to move the rescue shuttle autonomously through a warehouse facility towards said receiver shuttle, and a battery configured to deliver said emergency power to said receiver shuttle having a low-power state.

The driving means in the context of this invention refers to the main and essential subsystem of the rescue shuttle of the invention that comprises a set of wheels, the respective motors, sensors, power source and logic to drive the shuttle in the automated warehouse in an autonomous way. The rescue shuttle of the invention is therefore of the type that is capable to move autonomously to any location in the warehouse when instructed to do so. This means that it can find its path autonomously to a destination in the warehouse taking obstacles and other traffic into consideration.

In the context of the invention a low-power state of a receiver shuttle is a state of a robotic shuttle where the state-of-charge, SOC, of the power supply battery of the robotic shuttle drops below a preset level. This low-power state may be expressed in % of the maximum battery capacity, and will be reached when the remaining operating time of the battery drops below an acceptable level. This level may be 1%, preferably 5% or more preferably 10% of its capacity.

The rescue shuttle of the invention therefore offers the advantage to provide the capability to deliver a quick or temporary charging solution for robotic shuttles in an automated warehouse in situations where the shuttles' battery is low or critically low. Bringing the charging solution towards the robotic shuttle to be recharged rather than the other way around results in a reduction of the down-time during charging.

The rescue shuttle may be triggered to approach and meet a robotic shuttle for emergency charging based on the occurrence of different events. A service technician may for instance manually order a rescue shuttle on demand to charge a robotic shuttle somewhere in the racking system. Alternatively a central management system or server that manages the operation of all shuttles in the warehouse may for instance schedule the recharge for any of the shuttles based on a number of criteria or rules. Such a central management system or server knows the exact location of all shuttles in the warehouse and therefore can easily instruct the rescue shuttle to meet with the robotic shuttle for charging.

In a further embodiment, the rescue shuttle of the invention comprises a power interface configured to transfer electrical power to and from said battery. The interface of the invention at least comprises a number of electrical contact points allowing to connect with a corresponding charging port of the receiver shuttle, the robotic shuttle that is to be charged.

The power interface is advantageous in that a reliable and dedicated electrical connection can be established between the rescue shuttle and the receiver shuttle.

A further embodiment may comprise a docking mechanism configured to mechanically connect with said receiver shuttle during delivery of said emergency power. The docking mechanism ensures that the receiver shuttle is firmly connected with the rescue shuttle during the charging process, to ensure that a reliable electrical connection is established for charging the receiver shuttle.

Another embodiment may additionally comprise an identification module configured to identify said receiver shuttle. The identification module has to be understood as a detector, that is configured to read, detect or identify the unique identifier that is identifying the receiver shuttle at a close range. The close range being within a range of 2 meter, preferably 1 meter, and more preferably 0,5 meter. The identification module confirms the identification of the receiver shuttle at close range ensuring that the targeted receiver shuttle is within range before the docking process is initiated by the rescue shuttle.

The identification module may be, in a preferred embodiment, a computer vision module that is configured to identify visible identification markings that may be present on the exterior surface of the receiver shuttle. These external markings may be one of a QR-code, a bar code, a human readable identifier or machine readable identifier. The advantage of a computer vision module is that other functions may be attributed to it such as for instance the facilitation of the alignment of the rescue shuttle with the correct docking location of the receiver shuttle.

The identification module may be, in another preferred embodiment, based on a detector that is based on near-field technology such as NFC or RFID, and that is configured to identify the receiver shuttle based on closed range wireless communication technologies.

In a further embodiment, the rescue shuttle is also fitted with an alignment module that facilitates the alignment of the rescue shuttle with the correct docking location of the receiver shuttle. The alignment module ensures a very accurate and fast physical alignment of the rescue shuttle with the receiver shuttle to establish the electrical connection for charging.

In another embodiment, the rescue shuttle additionally comprises a communication module that allows the rescue shuttle to receive rescue charging instructions from a warehouse management system, and wherein the instructions at least comprises a unique identifier of a receiver shuttle in a low-power state.

In a further embodiment, the communication module of the rescue shuttle additionally receives instructions that comprise a location that defines a location in the warehouse for the rescue shuttle to meet the receiver shuttle. Further may these instructions also comprise information on the orientation of the receiver device, i.e. information on the orientation of the side or sides of the receiving shuttle that allows the rescue shuttle to establish the docking. The receiving shuttle may for instance have only one side configured with the electrical connections for charging, such that this side needs to be accessible for the rescue shuttle. This orientation information allows the rescue shuttle to identify in which direction the receiver shuttle may receive the docking mechanism of the rescue shuttle.

Further, the invention discloses a method to deliver emergency power to a receiver shuttle in an automated warehouse by a rescue shuttle, comprising the steps of receiving a unique identifier of a receiver shuttle having a low-power state, moving the rescue shuttle autonomously through a warehouse facility towards said receiver shuttle having a low-power state, confirming said the unique identifier of said receiver shuttle when said receiver shuttle is within the detection range of an identification module of said rescue shuttle, mechanically connecting a docking mechanism of said rescue shuttle to said receiver shuttle and establish an electrical connection over the power interface to deliver said emergency power from said rescue shuttle to said receiver shuttle.

The method of the invention is advantageous in that shuttles in an automated warehouse can be charged, at least partially, at any chosen location in the warehouse. It is advantageous to charge the shuttles at locations where the shuttles typically are not moving horizontally, are in a waiting position or are temporarily idle. Charging the shuttles during these unused periods of time saves time compared to a situation where shuttles are recharged at dedicated charging locations to which they have to move themselves. Also is it advantageous that in case of a complete depletion of battery power of a shuttle, a rescue shuttle can be sent out to recharge a blocking shuttle on location.

### Brief Description of the Drawings

Fig. 1 illustrates a rescue shuttle of the invention;
Fig. 2 illustrates a receiver shuttle.

### Detailed Description of Embodiment(s)

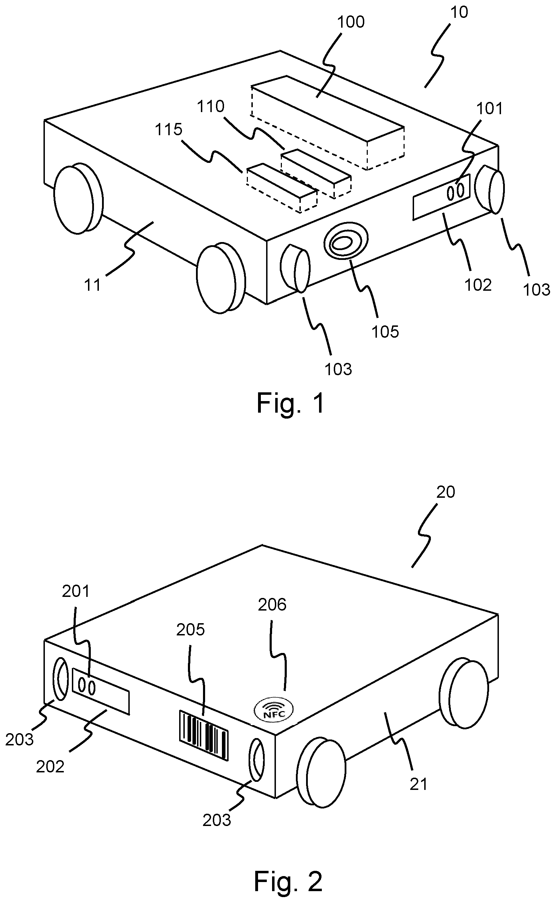

Fig. 1 illustrates a rescue shuttle of the invention, and gives an overview of its different components. In a first instance, an essential element of the rescue shuttle 10 of the invention is the driving means 11 which is the part of the device that autonomously drives the device around the automated warehouse. The driving means or cart at least comprises a set of wheels, motors and gears driving the wheels, a power source, for example batteries powering the motors, and the driving logic that enables the driving means to find its way around the automated warehouse. The driving means or cart thus may be based on the same design as the regular robotic shuttles that operate in a an automated logistic warehouse and that perform logistic tasks. The design of the driving means or cart of the rescue shuttle may therefore be identical as the design of the regular robotic shuttles, but as opposed to the logistic shuttles a rescue shuttle does not require the lifting means to carry goods or pallets.

The rescue shuttle 10 of the invention comprises a number of components to perform its dedicated functions. The main specialized function of the rescue shuttle is the recharging of the battery of a receiver shuttle. The term receiver shuttle is used in the context of the invention to indicate the target shuttle for recharging. In order to perform this recharging function, the rescue shuttle should be equipped with a power source 100, which may be a battery or another electrical power storage component.

The main battery that powers the driving means could be shared as power source 100 for recharging receiver shuttles, but this is not ideal as the recharging operation then would drain the battery of the rescue shuttle itself, driving it quickly to a low-power state. The power source is preferably integrated in the body of the driving means, or may be carried on top of its surface.

It is therefore preferably to foresee a dedicated power source 100 to perform the recharging operations of receiver shuttles in a low-power state. The ideal power source 100 of the invention is a power source that has a fast charging and a very fast discharging cycle, and that has a high power storage capacity. The power source of the invention therefore may be a rechargeable battery or a capacitor.

The battery of the invention is preferably of the type that can discharge and also preferably charge very fast. Lithium-ion batteries are currently the most popular choice for fast charging and discharging applications due to their high energy density, long cycle life, and relatively low self-discharge rate. They can provide high current discharge rates, but the actual discharge rate depends on the cell design, age, and charge/discharge cycles.

Supercapacitors, also known as ultracapacitors, are energy storage devices that have a very high power density and can provide rapid charging and discharging capabilities. They are particularly useful for applications that require short bursts of high power, such as electrical vehicles, renewable energy systems, and grid-scale energy storage. Supercapacitors however have a relatively small storage capacity and require more frequent recharging.

An electrical connection has to be established between the rescue shuttle and the receiver shuttle. This is established by means of a power interface 102 that comprises a number of electrical contact points 101. The power interface 102 is a connector that establishes a reliable, conductive connection between the two shuttles. At least two contact points 101 are foreseen to carry the electrical current during charging, but more contact points may be foreseen for instance to transfer signals or data between the two devices. The power interface 102 has to match or fit with a power interface 202 on the receiver shuttle 20.

In order for the rescue shuttle to establish a firm connection with the receiver shuttle, both shuttles need to align their power interfaces with each other before they are locked with each other for the duration of the charging operation. In order to establish a reliable connection for the duration of the complete charging cycle, both shuttles are preferably interlocked with each other. This interlocking of both shuttles may be achieved by means of a docking mechanism 103 that is at least present on the rescue shuttle. The docking mechanism 103 on the side of the rescue shuttle 10 will establish a mechanical connection with a part or portion of the receiver shuttle 20. This part or portion may be feature that is present on the exterior of the receiver shuttle, such as a corner, an indent, a hook or alike, or alternatively may be a dedicated feature or specifically designed counterpart 203 for the docking mechanism 103. Different docking mechanism may be considered.

Magnetic docking systems use magnets to guide and align vehicles for docking. Magnets mounted on the vehicles attract or repel each other to ensure proper alignment and connection. Mechanical docking pins can be used to ensure proper alignment and connection between vehicles. These pins fit into corresponding slots or holes on the other vehicle, securing them together. In rail-guided docking, one vehicle may have rails or guides along its sides, while the other vehicle has corresponding mechanisms to slide onto these rails for docking. This ensures precise alignment and connection.

Another feature of the rescue shuttle of the invention may be an identification module 105 configured to uniquely identify said receiver shuttle to ensure that the correct receiver shuttle is being approached for the recharging operation. The identification module may be a computer vision module that comprises a 2D or 3D camera supplemented with analysis capability. This module may then be configured to detect or recognize a targeted receiver shuttle when it is nearby. Alternatively, the identification module may be a barcode scanner, such as a laser barcode scanner. The identification module 105 is used to confirm the unique identity of the receiver shuttle to ensure that the rescue shuttle is approaching the correct receiver shuttle, and that the rescue shuttle is approaching the receiver shuttle from the correct side such that the power interfaces 102 and 202 of the two devices can be connected.

The identification module 105 that is based on a computer vision module further can assist in the docking process by means of adjusting the rescue shuttles movements based on fixed markings on the receiver shuttle.

When using computer vision or laser scanning systems, the receiver shuttles may be uniquely identified by the rescue shuttle by means of capturing, scanning and analysing dedicated markers that are applied on the exterior surface of the receiver shuttle. The receiver shuttles may be uniquely marked using unique visible markers, such as for instance serial number labels, bar-codes or QR-codes.

The identification module 105 may however also be based on using invisible identifier markers working at close range. These may be similarly configured to confirm the presence of the correct target receiver shuttle and may therefore be based on close range wireless communication detector technology, such as for instance NFC, RFID or Bluetooth connectivity.

As explained above, the alignment of both power interfaces is nontrivial. Therefore, an alignment module 115 may be configured to facilitate and support the power interface alignment and mechanical docking process of the rescue shuttle to the receiver shuttle. The alignment module 155 of the invention may be configured as an optical alignment system that use cameras or sensors to detect alignment markers or patterns on the receiver shuttle. This allows for precise alignment before docking. Infrared sensors can be used to detect the presence and position of another vehicle for docking. Once the vehicles are in close proximity, the infrared sensors help guide them into alignment. Radio-frequency identification (RFID) tags can be used for positioning and alignment. The receiver shuttle may have RFID tags that are detected by a reader on the rescue shuttle, ensuring proper alignment and connection. Also, laser systems can be used to guide the rescue shuttle into position for docking. Laser beams are projected from one vehicle to another, providing visual guidance for alignment.

The driving means may also comprise a communication module 110 that is configured to receives instruction from a warehouse management system. The instructions may comprise assignments about which receiver shuttle has to be recharged and where the meeting point is for recharging. The rescue shuttle will in this scenario receive a location in the warehouse where the receiver shuttle will be available for charging. Since each receiver shuttle has (at least) one power interface to receive the electrical charge from the rescue shuttle, it is important that the power interface is physically accessible for the rescue shuttle. The power interface should be oriented toward a side of the receiver shuttle that is accessible in its current position for an approaching rescue shuttle. Also this information can be communicated to the rescue shuttle for it to determine from which side it should approach the receiver shuttle for charging.

Alternatively, may the rescue shuttle receive recharging requests over the communication module 110 directly from a receiver shuttle.

The communication module 110 may also submit status information of the rescue shuttle itself to a warehouse management system, allowing close follow-up of the activities.

Fig. 2 illustrates a receiver shuttle 20 and its components with which a rescue shuttle may interact during a charging operation. A typical receiver shuttle comprises a driving module 21 similar to the one from the rescue shuttle 10. It also at least comprises a power interface 202 with at least two electrical contact points 201. The power interface 102 of the rescue shuttle 10 is adapted to match the connector of the power interface 202.

Additionally may the receiver shuttle comprise visible 205 or invisible 206 unique identifiers that can be detected by the identification module 105 of the rescue shuttle 10.

Also may a specifically designed counterpart 203 for the docking mechanism 103 be foreseen to support a more reliable docking operation.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A rescue shuttle (10) adapted to move in an automated warehouse facility and to deliver emergency power to a receiver shuttle (20) in said automated warehouse, said rescue shuttle comprising:
a driving means (11) to move the rescue shuttle autonomously through a warehouse facility towards said receiver shuttle;
a power source (100) configured to deliver said emergency power to said receiver shuttle having a low-power state.

2. The rescue shuttle (10) according to claim 1, wherein said power source (100) is a battery or a capacitor.

3. The rescue shuttle (10) according to claim 1, further comprising a power interface (102) configured to transfer electrical power to and from said power source (100).

4. The rescue shuttle (10) according to any of the preceding claims, further comprising a docking mechanism (103) configured to mechanically connect with said receiver shuttle (20) during delivery of said emergency power.

5. The rescue shuttle (10) according to any of the preceding claims, further comprising an identification module (105) configured to identify said receiver shuttle within a detection range of said identification module.

6. The rescue shuttle (10) according to claim 1, wherein said identification module (105) determines said unique identifier of said receiver shuttle (20) based on a visual detection of a visible identifier (205) on said receiver shuttle.

7. The rescue shuttle (10) according to claim 1, wherein said identification module (105) determines said unique identifier of said receiver shuttle (20) based on near-field technology (206) such as NFC or RFID.

8. The rescue shuttle (10) according to any of the preceding claims, further comprising an alignment module (115) configured to align said docking mechanism (103) with said receiver shuttle (20) to mechanically connect said docking mechanism (103).

9. The rescue shuttle (10) according to any of the preceding claims, further comprising a communication module (110) that is configured to receive a unique identifier of said receiver shuttle having a low-power state.

10. The rescue shuttle (10) according to claim 5, wherein said communication module (110) is further configured to receive a location and orientation of said receiver shuttle in the warehouse.

11. Method to deliver emergency power to a receiver shuttle (20) in an automated warehouse by a rescue shuttle (10), comprising the steps of:
receive a unique identifier of a receiver shuttle having a low-power state;
move the rescue shuttle autonomously through a warehouse facility towards said receiver shuttle having a low-power state;
confirm said the unique identifier of said receiver shuttle when said receiver shuttle is within the detection range of an identification module (110) of said rescue shuttle,
connect a docking mechanism (103) of said rescue shuttle to said receiver shuttle and establish an electrical connection over the power interface (102) to deliver said emergency power from said rescue shuttle to said receiver shuttle.

12. Method to optimize the SOC of a fleet of robotic shuttles in an automated warehouse, comprising the steps of:
collecting data about the SOC's of a fleet of robotic shuttles,
prioritizing the sequence in which individual robotic shuttles are to be recharged,
Instructing a rescue shuttle to meet said individual robotic shuttle at an optimal meeting point
said optimal meeting point being a location in said warehouse where the receiver shuttle is expected to be in standstill for a minimal period of time.
